# EUROPEAN PATENT APPLICATION

(11) **EP 2 014 961 A1**
(43) Date of publication of application: **14.01.2009**
(21) Application number: 07252341.8
(22) Date of filing: 08.06.2007
(51) Int. Cl.: F16K 3/22

(54) **Fluid control valve**

(71) Applicant: Delphi Technologies, Inc., Troy, Michigan 48007 (US)
(72) Inventor: Hoffmann, Marc, 5355 Oetrange (LU); Hauck, Andreas, 54298 Igel (DE); Hamdi, Nordine, 4986 Sanem (LU)
(74) Representative: Waller, Stephen

(57) **Abstract**

A fluid control valve 1 comprising a valve body 2 having a central bore 4 provided with a plurality of radial apertures defining inlet and outlet ports 5,6,7, and a spool slidably mounted within the central bore for axial movement therein to provide selective fluid communication between selected pairs or groups of the inlet and outlet ports, wherein at least one annular groove 14a,14b,14c is formed in an outer periphery of the valve body in the region of one of said radial apertures, a filter 12 being provided in said at least one annular groove, the filter comprising a perforated plate or membrane formed into a cylindrical shape and located in the annular bore, the perforated plate being held in place in the groove by retaining means 16, wherein the retaining means 16 comprises an elongate resilient member located around the outer periphery of the perforated plate and adapted to apply a compressive biasing force against the plate, free ends of the elongate resilient member extending substantially tangential to the annular groove to enable an opening force to be applied to the free ends of the elongate member to release said compressive biasing force and permit installation and/or removal of the retaining means.

## Description

The present invention relates to a fluid control valve and more particularly to a fluid control valve for controlling the flow of oil or hydraulic fluid to a hydraulic cam phaser.

Typically a fluid control valve for a hydraulic cam phaser comprises a generally cylindrical valve body having a central bore provided with radial apertures defining inlet and outlet ports, and a spool axially slidably mounted within the bore to provide selective fluid communication between selected pairs or groups of the inlet and outlet ports. A spring typically abuts against one end face of the spool to bias the spool in a first direction while an electromagnetic actuator is provided to apply a driving axial force to the other end face of the spool. An example of such a known fluid control valve is disclosed in US 2004/0182450 A1.

In order to avoid damage to the cam phaser mechanism it is desirable to provide filters in the inlet and/or outlet ports of the fluid control valve. In US 2004/0182450 A1 filters are provided in the form of a perforated plate associated with one or more of the ports, each plate being wrapped around the valve sleeve and located in a peripheral annular groove in the outer surface of the valve sleeve in the region of the respective port to cover the respective port. Each filter plate is held in place in its annular groove by means of a snap ring or retainer formed from thin spring steel bar bent into a circle. The ends of the snap ring are bent to extend in an axial direction to minimize vibration of the filter. The filter plate is of sufficient length to be wrapped around the annular groove with sufficient overlap to ensure a good seal while minimising pressure loss. The length of the overlapping portion is approximately 3mm.

A problem with the arrangement shown in US 2004/0182450 A1 is that the ends of the snap ring extend across the width of the filter, thus it is difficult to grip the ends of the ring to provide an opening force to allow installation and/or removal of the clip. A further problem is that the ends of the clip, extending transverse to the groove, may contact with the housing groove side walls and potentially shave off material from the housing side walls. These particles could either damage or reduce function of engine, VCP and / or Oil control valve in several ways like reduced flow to OCV or VCP due to particles blocking flow passages. The same concern is applicable to several other components in the engine oil circuit and the overall engine system that could potentially experience a partial up to a full function loss in worst case.

According to the present invention there is provided a fluid control valve comprising a valve body having a central bore provided with a plurality of radial apertures defining inlet and outlet ports, and a spool slidably mounted within the central bore for axial movement therein to provide selective fluid communication between selected pairs or groups of the inlet and outlet ports, wherein at least one annular groove is formed in an outer periphery of the valve body in the region of one of said radial apertures, a filter being provided in said at least one annular groove, the filter comprising a perforated plate or membrane formed into a cylindrical shape and located in the annular bore, the perforated plate being held in place in the groove by retaining means, wherein the retaining means comprises an elongate resilient member located around the outer periphery of the perforated plate and adapted to apply a compressive biasing force against the plate, free ends of the elongate resilient member extending substantially tangential to the annular groove to enable an opening force to be applied to the free ends of the elongate member to release said compressive biasing force and permit installation and/or removal of the retaining means. Preferably the free ends of the elongate member are arranged alongside one another. Alternatively, the free ends of the elongate member are spaced from one another in substantially parallel relationship.

By arranging the free ends of the elongate resilient member to extend substantially tangential to the annular groove, the risk of the free ends gouging the sides of the groove is avoided.

Preferably at least a region of the elongate member spaced from said free ends is arranged to extend substantially transverse to said annular groove to resist lifting or vibration of the ends of the plate. Such transverse portion also serves to centre the retaining means within the annular groove.

The retaining means is preferably in the form of a snap ring formed from said elongate member shaped into a loop having a diameter less than the diameter of said annular groove when no resultant radial force is applied to the snap ring. Preferably the length of said elongate member is selected so that said free ends thereof overlap one another when the retaining means is located within said annular groove. Preferably said overlapping free ends are arranged to lie alongside one another or adjacent one another.

In one embodiment, a region of the elongate member adjacent each free end thereof is formed into a substantially U or V shaped portion extending substantially orthogonally to the remainder of said elongate member such that said U or V shaped portions can extend substantially transverse to said annular groove to overlie overlapping end regions of said perforated plate or membrane when the retaining means is located within said annular groove to resist lifting or vibration of the ends of the plate. Preferably said U or V shaped portions extend in opposite directions to one another.

In an alternative embodiment, a region of the elongate member adjacent each free end thereof are formed into a Z shape, whereby a portion of each of said end regions extends orthogonally or at an angle to the remainder of the elongate member to extend substantially transverse to said annular groove to overlie overlapping end regions of said perforated plate or membrane when the retaining means is located within said annular groove to resist lifting or vibration of the ends of the plate. Preferably said orthogonally extending or angled portions extend in opposite directions to one another.

Preferred embodiments of the present invention will now be described with reference to the accompanying drawings, in which:-
Fig. 1 is a side view of a fluid control valve according to an embodiment the present invention;
Fig. 2 is a detailed view of a filter plate of the valve of Fig. 1;
Fig. 3 is a detailed perspective view of the retainer of the fluid control valve of Fig. 1;
Fig. 4 is a detailed perspective view of the retainer of a fluid control valve according to a second embodiment of the present invention.

A fluid control valve 1 according to the present invention comprises a cylindrical valve body 2 having a central bore 4 and being provided with radial apertures 5,6,7 defining inlet and outlet ports. A spool (not shown) is axially slidably mounted within the central bore 4 of the valve body 2 to provide selective fluid communication between selected pairs or groups of the inlet and outlet ports 5,6,7. The spool is axially moveable within the valve body by means of an electromagnetic actuator 8 for applying a driving axial force to the spool against the action of a return spring (not shown).

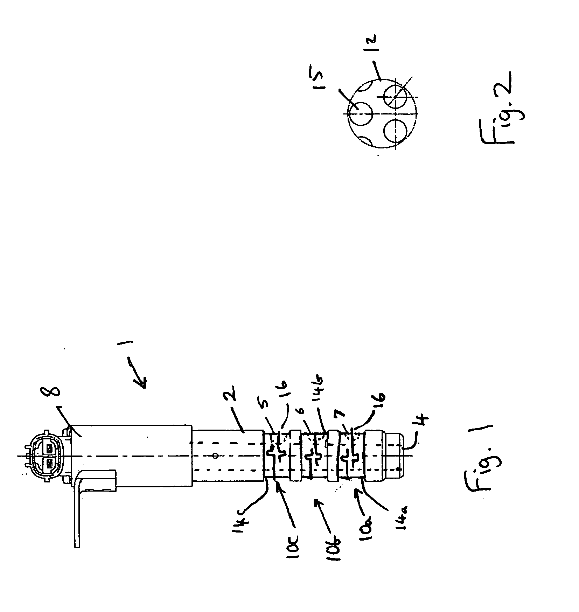

In order to avoid damage to the cam phaser mechanism a filter 10a, 10b, 10c is provided over at least an outlet port 5,6,7 of the valve body or over each of the ports (as shown). Each filter is in the form of a perforated plate 12 (see Fig. 2) wrapped around the valve body and respectively located in a peripheral annular groove 14a,14b,14c in the outer surface of the valve body in the region of the respective port or aperture to cover the aperture. Each perforated plate 12 comprises a thin sheet of steel having a plurality of perforations 15 formed therein in the form of a strainer. Each filter plate 12 is of sufficient length to be wrapped around its respective annular groove 14a, 14b, 14c with sufficient overlap to ensure a good seal while minimising pressure loss.

Each filter plate 12 is held in place in its annular groove 14a,14b,14c by means of a retainer 16 formed from thin spring steel bar bent into a loop. Each retainer 16 is mounted in a respective groove 14a,14b,14c so the free ends of the retainer extend across the region of overlap of the filter plate 12. The free ends of the retainer extend substantially tangentially to the respective annular groove 14 so that said free ends can be engaged by a suitable tool to expand the retainer 16 to enable the retainer to be installed in and removed from the respective groove for installation and replacement of the respective filter plate.

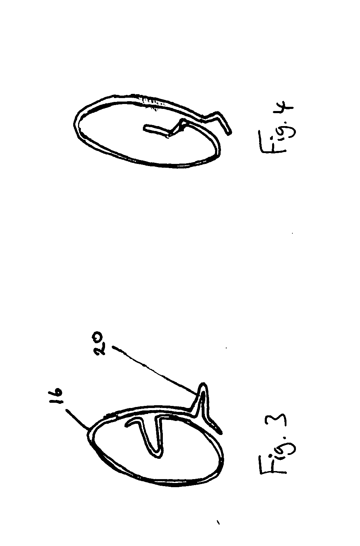

In a first embodiment of the invention, illustrated in Figs 1 and 3, regions of each retainer 16 adjacent each free end thereof are formed into a substantially U or V shaped portion 20 extending substantially orthogonally to the remainder of the retainer such that said U or V shaped portions 20 can extend substantially transverse to the annular groove 14 within which the retainer is located to overlie overlapping end regions of the filter plate 12 to resist lifting or vibration of the ends of the plate. In such embodiment, the free ends of the retainer 16 lie alongside one another.

In a second embodiment of the invention, illustrated in Fig. 4, regions of the each retainer 16 adjacent each free end thereof are formed into a Z shaped portion 20, whereby the free ends of the retainer lie parallel to one another and spaced apart to enable the free ends of the retainer to apply pressure against the side or border regions of the filter plate 12 in the region of overlap of the ends of the plate to ensure that the overlapping ends of the filter plate are firmly held in place in the groove by the retaining force provided by the retainer.

The U or Z shaped portions of the clip serve to center the clip in the groove and this way also on the filter width.

Various modifications and variations to the described embodiments of the invention will be apparent to those skilled in the art without departing from the scope of the invention as defined in the appended claims. Although the invention has been described in connection with specific preferred embodiments, it should be understood that the invention as claimed should not be unduly limited to such specific embodiments.

## Claims

1. A fluid control valve comprising a valve body having a central bore provided with a plurality of radial apertures defining inlet and outlet ports, and a spool slidably mounted within the central bore for axial movement therein to provide selective fluid communication between selected pairs or groups of the inlet and outlet ports, wherein at least one annular groove is formed in an outer periphery of the valve body in the region of one of said radial apertures, a filter being provided in said at least one annular groove, the filter comprising a perforated plate or membrane formed into a cylindrical shape and located in the annular bore, the perforated plate being held in place in the groove by retaining means, wherein the retaining means comprises an elongate resilient member located around the outer periphery of the perforated plate and adapted to apply a compressive biasing force against the plate, free ends of the elongate resilient member extending substantially tangential to the annular groove to enable an opening force to be applied to the free ends of the elongate member to release said compressive biasing force and permit installation and/or removal of the retaining means.

2. A fluid control valve as claimed in claim 1, wherein the free ends of the elongate member are arranged alongside one another.

3. A fluid control valve as claimed in claim 1, wherein the free ends of the elongate member are spaced from one another in substantially parallel relationship.

4. A fluid control valve as claimed in claim 1 or claim 2, wherein at least a region of the elongate member spaced from said free ends is arranged to extend substantially transverse to said annular groove to resist lifting or vibration of the ends of the plate.

5. A fluid control valve as claimed in any preceding claim, wherein the retaining means is in the form of a snap ring formed from said elongate member shaped into a loop having a diameter less than the diameter of said annular groove when no resultant radial force is applied to the snap ring.

6. A fluid control valve as claimed in claim 5, wherein the length of said elongate member is selected so that said free ends thereof overlap one another when the retaining means is located within said annular groove.

7. A fluid control valve as claimed in claim 6, wherein an region of the elongate member adjacent each free end thereof is formed into a substantially U or V shaped portion extending substantially orthogonally to the remainder of said elongate member such that said U or V shaped portions can extend substantially transverse to said annular groove to overlie overlapping end regions of said perforated plate or membrane when the retaining means is located within said annular groove to resist lifting or vibration of the ends of the plate.

8. A fluid control valve as claimed in claim 7, wherein said U or V shaped portions extend in opposite directions to one another.

9. A fluid control valve as claimed in claim 6, wherein a region of the elongate member adjacent each free end thereof are formed into a Z shape, whereby a portion of each of said end regions extends orthogonally or at an angle to the remainder of the elongate member to extend substantially transverse to said annular groove to overlie overlapping end regions of said perforated plate or membrane when the retaining means is located within said annular groove to resist lifting or vibration of the ends of the plate.

10. A fluid control valve as claimed in claim 9, wherein said orthogonally extending or angled portions extend in opposite directions to one another.
